# EUROPEAN PATENT APPLICATION

(11) **EP 3 000 659 A1**
(43) Date of publication of application: **30.03.2016**
(21) Application number: 14187655.7
(22) Date of filing: 03.10.2014
(51) Int. Cl.: B60R 1/04, B60R 1/08

(54) **Interior rear view mirror assembly**

(30) Priority: 26.09.2014 US 201414497487
(71) Applicant: Azmudeh, Manucher, Palm Beach, FL 33480 (US)
(72) Inventor: Azmudeh, Manucher, Palm Beach, FL 33480 (US)
(74) Representative: Romano, Giuseppe

(57) **Abstract**

A rear-view mirror assembly (100) for viewing to the rear of a vehicle at least adjacent lanes to the lane occupied by the vehicle comprises a mount (102) for mounting the rear-view mirror assembly to an interior of the vehicle and a mirror including a rear mirror shell (124) and a flat reflective surface (102) rigidly mounted to a front of the mirror shell. An electric servo (152) is mounted to the rear of the shell and is attached to the mount and operable to selectively pivot the mirror about a vertical axis (C) and a horizontal axis (D). A switch (162, 164) is remotely mounted away from the mirror and is accessible to an operator of the vehicle. The switch is selectively positionable to selectively drive the servo for pivoting the mirror about the vertical axis and the horizontal axis.

## Description

### Field of the Invention

The present disclosure generally pertains to vehicle rear-view mirrors designed to allow a driver to see rearward through a vehicle's rear windshield or windscreen; more particularly, the present disclosure is directed to improved rear-view mirror apparatuses that increase the vehicle driver's lateral viewing range while substantially reducing rear-viewing blind spots.

### Background of the Invention

Since the turn of the 20th century, motorized vehicles have become an increasingly popular and necessary mode of transportation. A driver's situational awareness while driving a vehicle has always been a significant safety concern. The importance of a driver's awareness of the presence of other nearby vehicles is a crucial factor in reducing the likelihood of an accident. A driver's situational awareness improves as the driver's viewing range (i.e., forward viewing, rearward viewing and side viewing) is increased. While forward viewing has been facilitated by expansive windshields and side windows, viewing the area to the sides and rear of a vehicle while driving has been a long-standing issue. The earliest known rear-view mirror mounted on a motor vehicle appeared in a race car at the inaugural Indianapolis 500 race in 1914, enabling the driver to view an area immediately behind the vehicle.

While the rear-view mirror clearly facilitated viewing directly to the rear of the vehicle, it did not come without inherent limitations. In particular, even when used in combination with side view mirrors, the rear-view mirror did not eliminate so-called blind spots. A blind spot in a vehicle is an area around the vehicle that cannot be directly observed by the driver while at the controls, under certain circumstances. Blind spots exist in a wide range of motor vehicles including, for example, various automobiles and trucks. In transport, driver visibility is the maximum distance at which the driver of a vehicle can see and identify prominent objects around the vehicle - particularly, adjacent motor vehicles. The ability to be aware of adjacent motor vehicles is of particular importance while making a lane change. When a driver makes a lane change under the false impression that the adjacent lane is clear, there is a very high likelihood of causing a vehicular accident. Accordingly, since the advent of the rear-view mirror, there has been a continuous effort by vehicle manufacturers to increase a driver's ability to see blind spots on both sides of the automobile. However, aside from the introduction of some variations in design and functionality, the basic design of mirrors has not changed significantly.

In cars, the rear-view mirror is usually affixed to the top of the windshield on a double-swivel mount, allowing it to be adjusted to suit the height and viewing angle of any driver, and to swing harmlessly out of the way if impacted by a vehicle occupant during a collision. In recent years, two general categories of technologies have been implemented: (1) Blind Spot Monitors for viewing directly behind the vehicle, where the typically blocks viewing of up to about twenty feet behind the vehicle; and (2) Rear-View Mirrors for viewing the blind spots on opposite sides of lane occupied by the driver. The present invention primarily deals with the latter technology.

A variety of commercially available devices have been marketed as notably improving a driver's ability to more easily identify blind spots across lanes, including, for example, larger and/or wider mirrors, prism-intensive, concave/convex mirrors, and more recently, video-camera viewing devices.

Enlargement of the surface area of side mirrors has provided, at best, an insignificant improvement. The prism-intensive, concave/convex mirrors all display the objects much smaller than they really are - hence, the "objects in mirror are closer than they appear" language commonly printed directly on side mirrors by manufacturers. In spite of such warnings, it is human nature for a driver to still accept what he sees in the mirror without making a mental transition to an interpretation consistent with the warning. Thus, the false view presented by these mirrors can also contribute to a potential accident; particularly during high stress traffic situations.

The most recent innovations revolve around video cameras installed on the rear of a vehicle. Even though the video cameras and video displays associated therewith may be a technological advancement, their practicality for use while driving is often less than desirable. The difficulty primarily arises when the driver is required to translate his vision from the traditional rear-view mirror, at the upper mid-portion of the windshield, to the video display, which is often embedded in the mid-portion of the vehicle dashboard. This process often takes one to three seconds, which is more than adequate time for an accident to occur.

The real task at hand is not to merely enable a driver to see the immediately adjacent lanes on opposite sides of the driver's moving vehicle, but to increase the driver's lateral vision across a full spectrum of lanes. This is necessary to recognize another driver two lanes over who is also attempting to move into the same lane. In other words, the ability of a driver to have a clear view of the immediately adjacent left lane provides no benefit if another driver two lanes over to the left is simultaneously preparing to move his vehicle one lane to his right. Although the lane separating the two drivers appears to be clear to both drivers, if both drivers decide to change lanes at or about the same time, there is a clear imminent danger of the two vehicles physically impacting one another, or one vehicle cutting off the other. In either instance, a resulting accident is almost inevitable.

Due to the diversity of vehicle configurations offered by manufacturers, constantly changing driving conditions, visibility, passenger headrest support height and other variables, the location and mode of operation of the rear-view mirror requires constant adjustment. Additionally, the primary difficulty, and the corresponding related increased potential for accidents, derives from the mirrors being widely spatially separated from one another, or the separation of a traditional rear-view mirror to a dashboard mounted video display.

Accordingly, there is a long felt and unmet need for a rear-view mirror system that overcomes this underlying problem, by enabling a vehicle driver, in a substantially single view, to concurrently see the area directly behind the vehicle and lateral areas to the left and right sides of the vehicle, including areas conventionally deemed to be blind spots. It would be highly desirable to provide two different embodiments of such a system: (1) a primary implementation incorporating available state-of-the-art electronics providing facilitated use and automated operation of a single rear-view mirror; and (2) a secondary, less expensive, manually operable embodiment intended for low- to mid-priced vehicles.

### Summary of the Invention

The present disclosure is generally directed to a rear-view mirror apparatus that overcomes the drawbacks, disadvantages and limitations, of existing systems by enabling substantially concurrent driver viewing of the area directly to the rear of a vehicle, lateral areas at least including lanes directly adjacent to the driver's lane, but preferably a fuller spectrum of lanes, and areas conventionally considered to be blind spots. The rear-view mirror apparatus includes two embodiments: (1) a primary embodiment incorporating an electrically-operated single mirror particularly configured and adapted for being implemented into more advanced, higher priced vehicles; and (2) a secondary embodiment incorporating a manually-operated triple-segmented mirror, including a central mirror for regular viewing of the area to vehicle's rear, and a pair of mirrors on opposite sides of the central mirror, which are angled to each view cross lanes on each side of the driver's lane, particularly configured and adapted for being incorporated into buses, trucks, and average- to lower-priced vehicles.

Electrically-powered single mirror implementation. In this primary implementation incorporating a single mirror, an electric servo is mounted to the rear a mirror housing shell and is attached to the mount and operable to selectively pivot the mirror about a vertical axis and a horizontal axis. A switch is remotely mounted, spatially separated from the mirror, on the vehicle steering wheel and is accessible to an operator of the vehicle to engage the servo for pivoting the mirror about the vertical axis and horizontal axis. The mirror moves back to its initial position when the switch is subsequently pressed, or when the driver turns the steering wheel back to its original position following a lane change.

As will be apparent to those skilled in the art, the construction and mechanism of operation may comprise the same well-known electrical construction and operation of conventionally electrically-operated side mirrors prevalent in modem day vehicles.

In an aspect, the switch may be mounted on the steering wheel of the vehicle.

In yet another aspect, the switch may comprise a first switch and a second switch, wherein the first switch is mounted proximate to a left side of the steering wheel and the second switch is mounted proximate to a right side of the steering wheel.

In another aspect, the switch may comprise a rocker switch depressible in at least two different directions, wherein a first direction controls the servo to pivot the mirror about a vertical axis and a second direction to pivot the mirror about a horizontal axis.

In still another aspect, the switch includes a selective memory position which slaves the servo to return the mirror to a preset orientation.

In yet another aspect, the rearview mirror assembly further includes a steering sensor electronically integrated therein such that when the steering sensor detects a return to a straight ahead steering position from a turning position, the servo is slaved to return the mirror to a preset orientation.

Triple segmented mirror implementation. In this secondary implementation, a center mirror is provided attached to a mount and is adjustable with respect to the mount for viewing to the rear for at least the traffic lane occupied by the vehicle. A left mirror is adjustably mounted to the left side of the center mirror and is selectively adjustable with respect to the center mirror for viewing a first traffic lane other than the traffic lane occupied by the vehicle. A right mirror is adjustably mounted to a right side of the center mirror and is selectively adjustable with respect to the center mirror for viewing a second traffic lane other than the traffic lane occupied by the vehicle.

In an aspect, each of the center mirror, left mirror, and right mirror, includes a rear mirror shell and a flat reflective surface rigidly mounted to a front of the shell.

In still another aspect, the left mirror and the right mirror are each pivotal about a respective left vertical axis and a right vertical axis, and a respective left horizontal axis and a right horizontal axis.

In yet another aspect, the left mirror is mounted to a left end of the center mirror, and the right mirror is mounted to a right end of the center mirror.

In still a further aspect, the left mirror and the center mirror are joined one to the other with a left friction joint, and the right mirror and the center mirror are joined one to the other with a right friction joint.

In another aspect, the left friction joint defines the left vertical axis about which the left mirror is pivotal, and the right friction joint defines the right vertical axis about which the right mirror is pivotal.

In another aspect, the left friction joint comprises a left cylindrical head cantilevered from the left end of the center mirror and defines the left vertical axis. A left friction sleeve is frictionally engaged about the left cylindrical head and further includes a left horizontal stub extending therefrom, the horizontal stub is frictionally received in a horizontal receptacle extending from a right end of the left mirror. The right friction joint comprises a right cylindrical head cantilevered from the right end of the center mirror and defines the right vertical axis. A right friction sleeve frictionally engages the right cylindrical head and includes a right horizontal stub extending therefrom. The right horizontal stub is frictionally received in a horizontal receptacle extending from a left end of the right mirror.

In a still further aspect, the left horizontal stub and the horizontal receptacle extending from the right end of the left mirror define the left horizontal axis about which the left mirror is pivotal, and the right horizontal stub and the horizontal receptacle extending from the left end of the right mirror define the right horizontal axis about which the right mirror is pivotal.

These and other features, aspects, and advantages of the invention will be further understood and appreciated by those skilled in the art by reference to the following written specification, claims and appended drawings.

### Brief Description of the Drawings

The invention will now be described, by way of example, with reference to the accompanying drawings, where like numerals denote like elements and in which:
FIG. 1 presents a top front isometric view of a triple view rear-view mirror embodying the present invention wherein the mirror is rotatable about a vertical axis and a horizontal axis;
FIG. 2 is a partially exploded view of the powered mirror of FIG. 1;
FIG. 3 is a left side elevation view of the powered mirror illustrating that the mirror can be pivoted about a horizontal axis;
FIG. 4 is a top plan view of the powered mirror illustrating that the mirror can be pivoted about a vertical axis;
FIG. 5 is a schematic diagram of the powered mirror of FIG. 1 electrically integrated with mirror controls mounted to a vehicle steering wheel;
FIG. 6 presents a top front isometric view of an alternate embodiment triple rear-view mirror comprising three individual mirrors and embodying the present invention, wherein each mirror is adjustable with respect to the other mirrors;
FIG. 7 presents a partially exploded top rear isometric view of the triple rear-view mirror of FIG. 6;
FIG. 8 presents a top plan view of the triple mirror in a linear alignment configuration;
FIG. 9 presents a top plan view of the triple mirror of FIG. 8 wherein the outer mirrors are angularly adjusted with respect to the middle mirror; and
FIG. 10 presents a front isometric view of the triple mirror illustrating that the outer mirrors can be adjusted about a longitudinal axis with respect to the center mirror.

Like reference numerals refer to like parts throughout the various views of the drawings.

### Detailed Description of the Invention

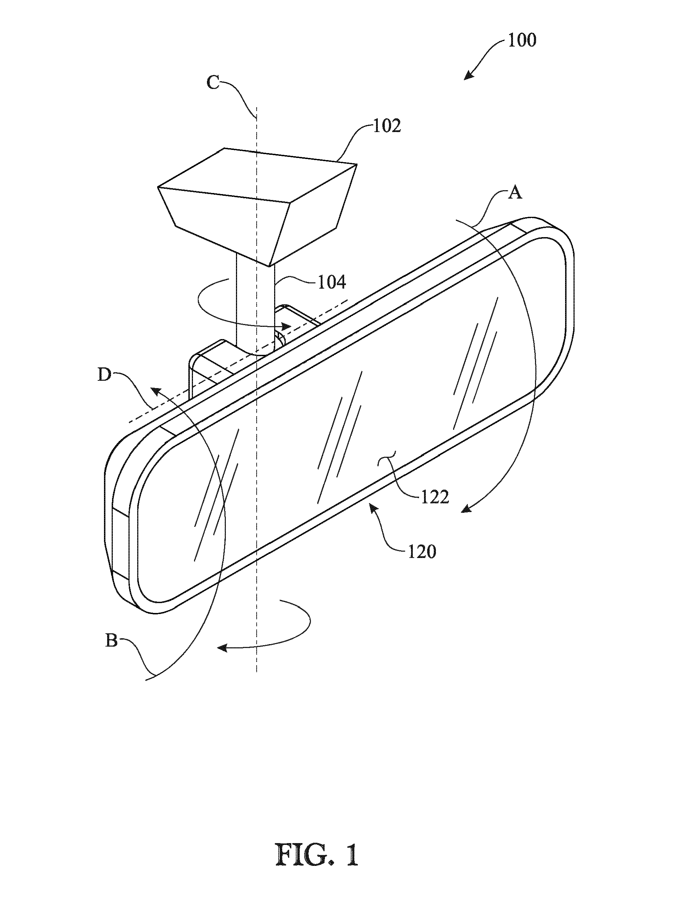

The following detailed description is merely exemplary in nature and is not intended to limit the described embodiments or the application and uses of the described embodiments. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply exemplary embodiments of the inventive concepts defined in the appended claims. Hence, specific dimensions and other physical characteristics relating to the embodiments disclosed herein are not to be considered as limiting, unless the claims expressly state otherwise.

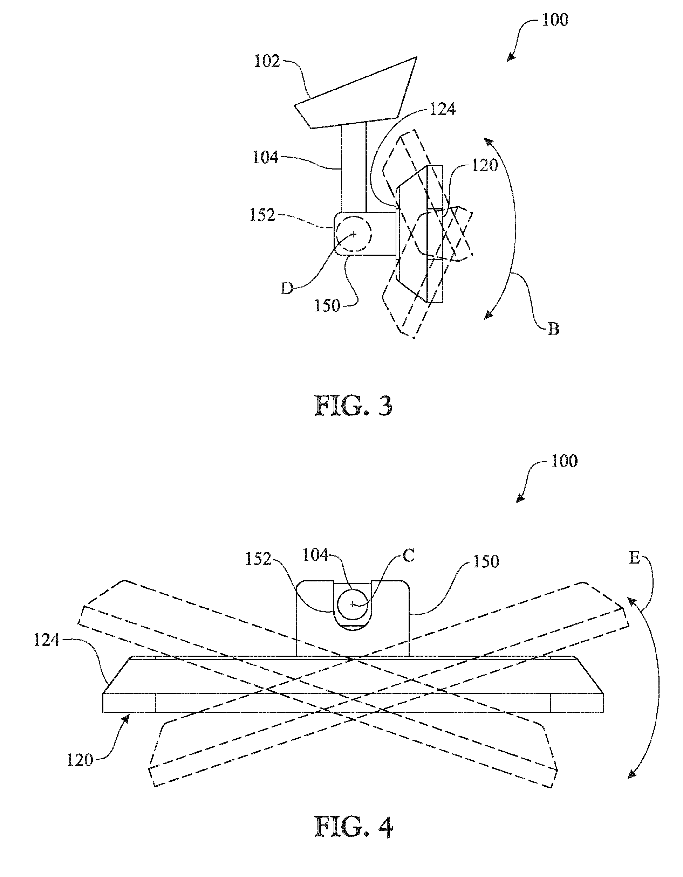

In one exemplary implementation of the invention, a rear-view mirror assembly 100 is shown in FIGS. 1-5 illustrating its various components. FIGS. 1-2 illustrates the rear-view mirror assembly 100 has a mount 102 for attachment to an interior portion of a vehicle proximate to an upper part of the windshield for convenient viewing by the vehicle operator. A single mirror 120 includes a rear mirror shell 124 and a flat reflective surface 122 rigidly affixed to a front thereof. A housing 150 is affixed to the back of the rear mirror shell 124 and encloses therein an electronic servo 152. The electronic servo 152 is connected to the lower end of the support 104 and is operable to selectively pivot the mirror 120 about a vertical axis 'C' in an arc 'E' (FIG. 4). The electronic servo 152 is also operative to selectively pivot the mirror 120 about a horizontal axis 'D' in a downward arc 'A' or an upward arc 'B'.

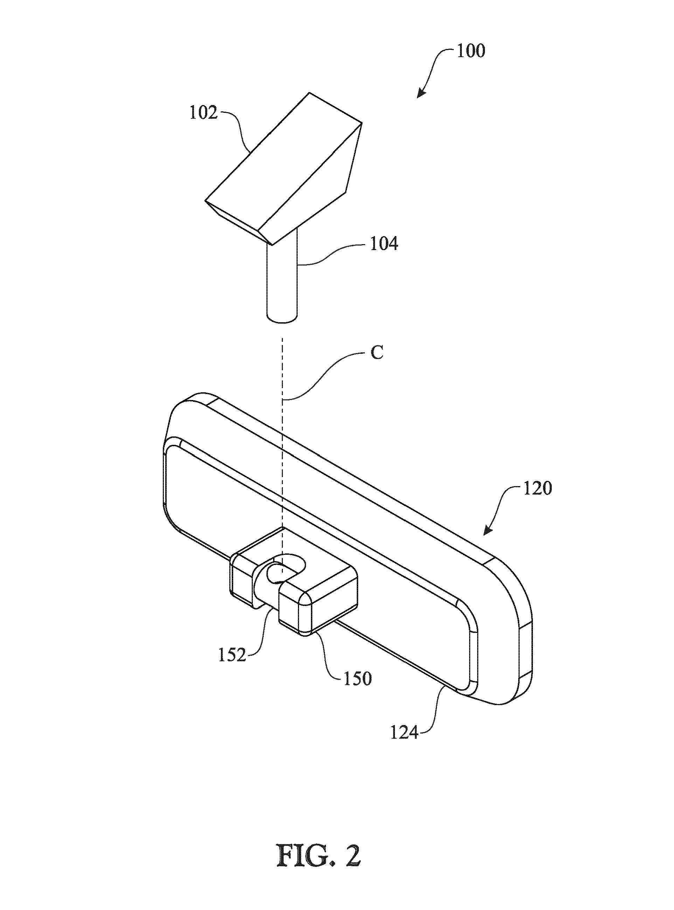

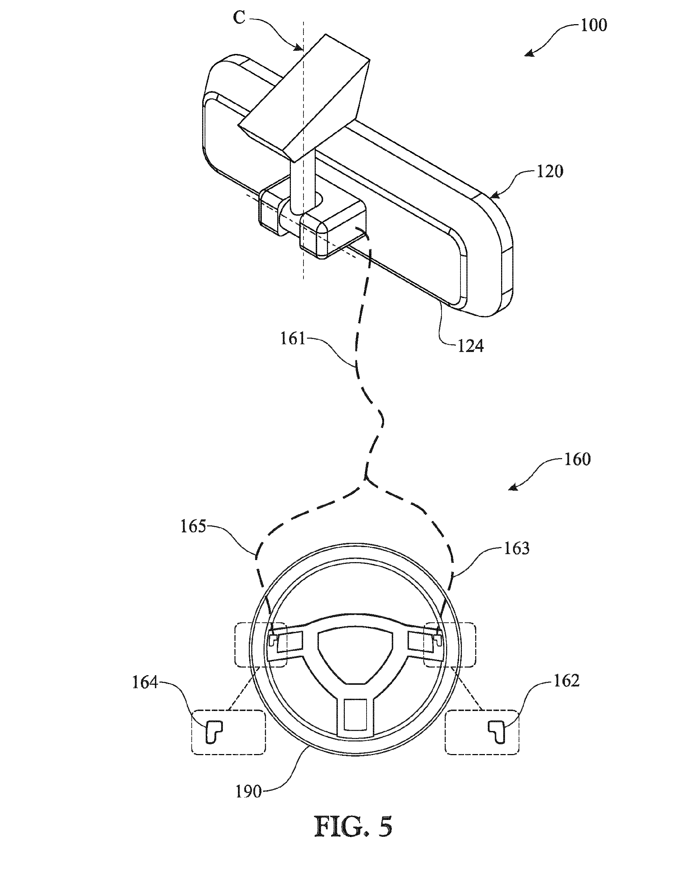

As illustrated in FIG. 5, the rear-view mirror assembly 100 also includes a remote control 160 having at least one remote switch such as right switch 162 which is mounted to be accessible to an operator of the vehicle such as on a vehicle steering wheel 190 and proximate to a right side of the steering wheel 190. The remote control 160 can also include a second switch such as left switch 164 mounted on a left side of the steering wheel 190. The right and left switches 162, 164 are electrically communicative with an interconnected to the electronic servo 152 (FIGS.2-4) with the electric cable 161, right switch cable 163, and left switch cable 165 in a manner such that control of the electronic servo 152 can be accomplished utilizing either switch 162, 164.

The right switch 162 (FIG. 5) and the left switch 164 (FIG. 5) are typically multi-positional rocker switches which are depressible in at least two different directions wherein a first direction controls the electric servo 152 (FIGS. 2-4) to pivot the mirror 120 (FIG. 1) about the vertical axis 'C' (FIG. 4) and a second direction to pivot the mirror 120 (FIG. 1) about the horizontal axis 'D' (FIG. 3). One or both of the right switch 162 (FIG. 5) and the left switch 164 (FIG. 5) can include a selective memory position such that depressing the switch to the memory position slaves the servo to return the mirror 120 (FIG.1) to a preset orientation. Additionally, the rear-view mirror assembly 100 (FIGs.1-2) can further include a steering sensor (not shown) electronically integrated therein such that when the steering sensor detects a return of the vehicle steering to a straight ahead position from a turning position, the servo 152 (FIGS. 2-4) is slaved to return the mirror 120 (FIG. 1) to a preset orientation.

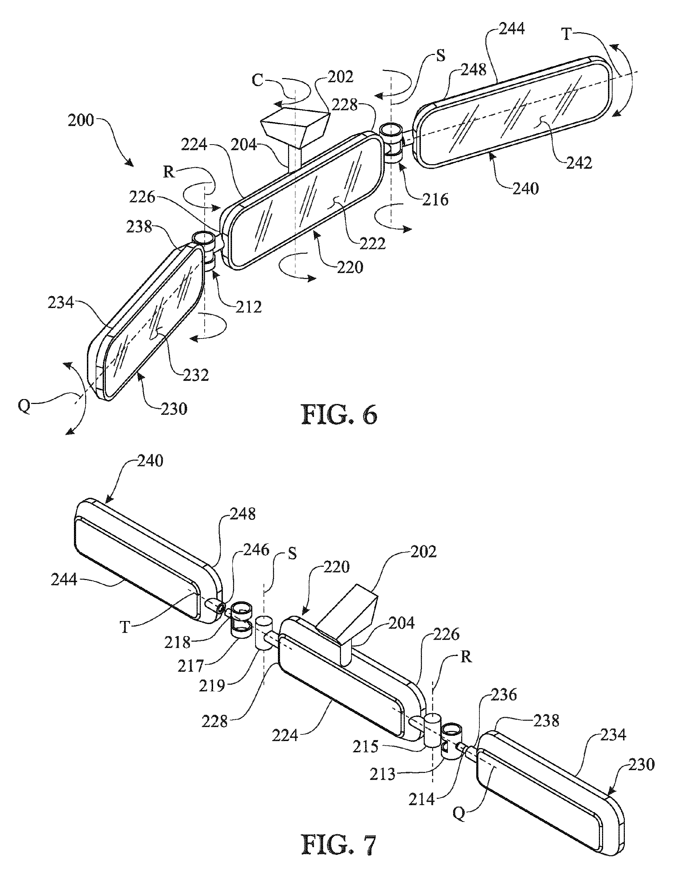

An alternate embodiment rear-view mirror assembly 200 is shown in FIGS. 6-10, wherein, in FIG 6 the rear-view mirror assembly 200 includes a mount 202 including a support 204 depending vertically downward therefrom. A support 204 depends from and forms a part of the mount 202. A center mirror 220 has a center mirror shell 224 to which a flat reflective surface 222 is rigidly affixed. The center mirror shell 224 is affixed to the support 204 in a manner such as to permit the pivoting of the center mirror 220 about an axis 'C' defined by the support 204.

As shown FIG. 6, a left mirror 230 comprises a left mirror shell 234 having a flat reflective surface 232 rigidly affixed to a front thereof. The left mirror 230 has a right end 238 affixed to a left end 226 of the center mirror 220 with a left friction joint 212. The left friction joint 212 permits the left mirror 230 to pivot about a left vertical axis 'R' defined by the left friction joint 212, and also to pivot about a horizontal axis 'Q'. The left friction joint 212 comprises a left cylindrical head 215 (FIG. 7) cantilevered from the left end 226 of the center mirror 220. The left cylindrical head 215 (FIG. 7) defines the left vertical axis 'R'. A left friction sleeve 213 (FIG. 7) is frictionally engaged about the left cylindrical head 215 (FIG. 7) and includes a left horizontal stub 214 (FIG. 7) extending therefrom. The left horizontal stub 214 (FIG. 7) is frictionally received in a horizontal receptacle 236 (FIG. 7) extending from a right end 238 (FIG. 7) of the left mirror 230 (FIG. 6) The left horizontal stub 214 (FIG. 7) and the horizontal receptacle 236 (FIG. 6) in combination define the horizontal axis 'Q' (FIG. 6-7) about which the left mirror 230 (FIG. 6) pivots.

As shown in FIG. 6, a right mirror 240 comprises a right mirror shell 244 having a flat reflective surface 242 rigidly affixed to a front thereof. The right mirror 240 has a left end 248 affixed to a right end 228 of the center mirror 220 with a right friction joint 216. The right friction joint 216 permits the right mirror 230 to pivot about a vertical axis 'S' defined by the right friction joint 216, and also to pivot about a horizontal axis 'T'. The right friction joint 216 comprises a right cylindrical head 219 (FIG. 7) cantilevered from the right end 228 of the center mirror 220. The right cylindrical head 219 (FIG. 7) defines the right vertical axis 'S'. A right friction sleeve 217 (FIG. 7) is frictionally engaged about the right cylindrical head 219 (FIG. 7) and includes a right horizontal stub 218 (FIG. 7) extending therefrom. The right horizontal stub 218 (FIG. 7) is frictionally received in a horizontal receptacle 246 (FIG. 7) extending from a left end 248 (FIG. 7) of the right mirror 240 (FIG. 7). The right horizontal stub 218 (FIG. 7) and the horizontal receptacle 246 (FIG. 7) in combination define the horizontal axis 'T' (FIG. 7) about which the right mirror 240 (FIGS. 6-7) pivots.

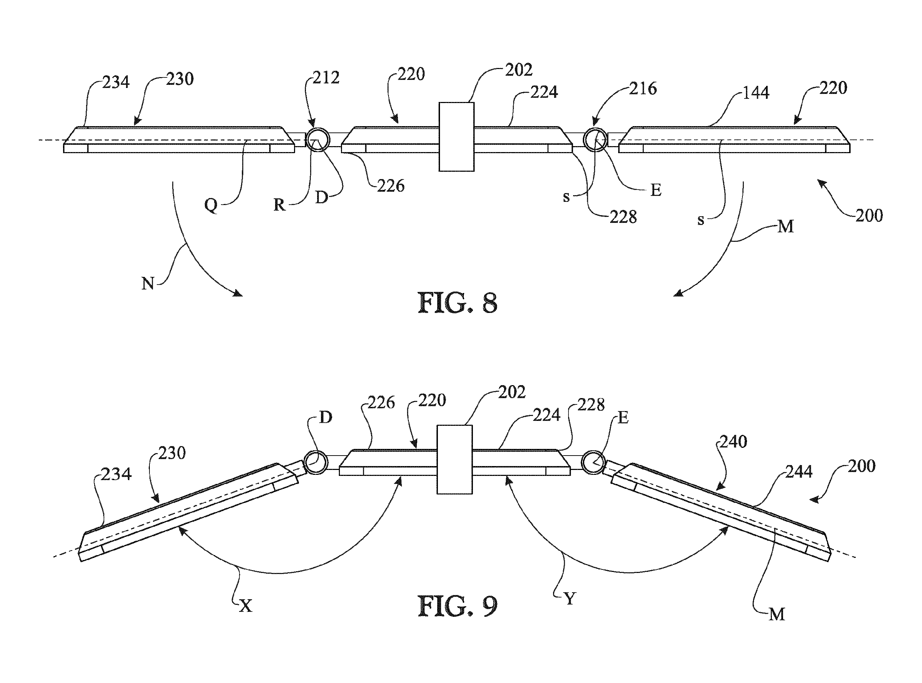

As shown in FIG. 8, the left mirror 230 is at least pivotal about the left vertical axis 'R' from a position substantially in linear alignment with the center mirror 220 (FIG. 8) in a counter-clockwise arc 'N' (FIG. 8) forming an obtuse angle 'X' (FIG. 9) with the center mirror 220 (FIG. 8). Typically, the angle 'X' (FIG. 9) formed by the left mirror 230 (FIG. 8) and the center mirror 220 (FIG. 8) is no less than a 90° right angle. Similarly, the right mirror 240 (FIG. 9) is at least pivotal about the right vertical axis 'S' (FIG. 8) from a position substantially in linear alignment with the center mirror 220 (FIG. 8) in a clockwise arc 'M' (FIG. 8) forming an obtuse angle with the center mirror 220. Typically, the angle 'Y' (FIG. 9) formed by the right mirror 230 and the center mirror 220 is no less than a 90° right angle.

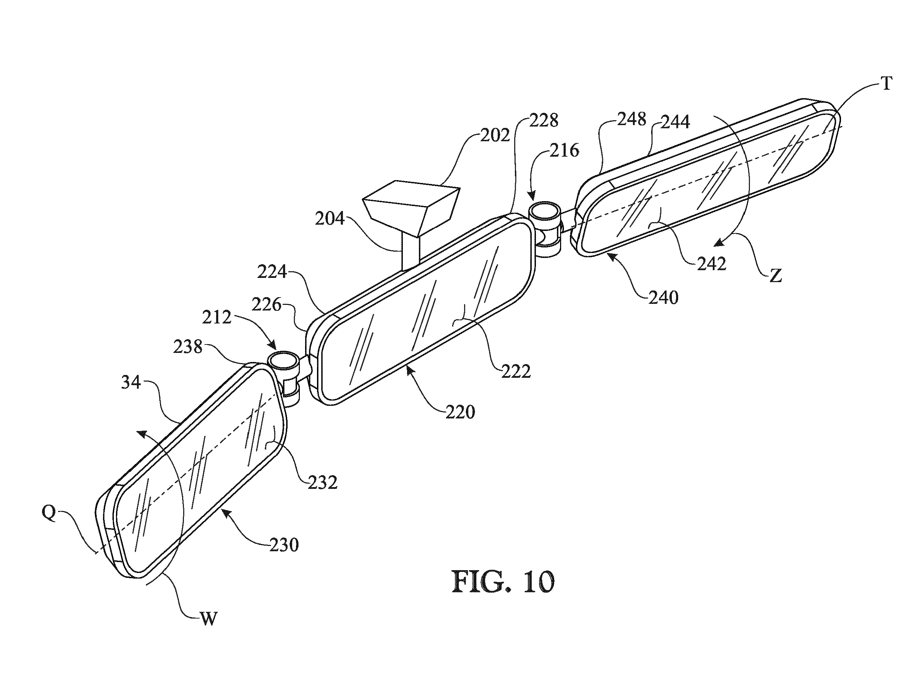

In use, and referring now to FIGS. 8-10, the mirror assembly 200 can be adjusted by a vehicle operator when sitting in the operator's seat of the vehicle pivoting the center mirror 220 about the support 204 to optimize the operator's view directly behind the vehicle. The operator can then pivot the left mirror 230 in a counter-clockwise direction about the vertical axis 'R' (FIG. 8) to an optimal angle 'X' (FIG. 9) and about horizontal axis 'Q' (FIG. 8) through arc 'W' (FIG. 10) for viewing to the right rear of the vehicle at the right-most adjacent traffic lane typically known as one of the vehicle's blind spots. Similarly, the operator can then pivot the right mirror 240 (FIG. 9) in a clockwise direction about the vertical axis 'S' (FIG. 8) to an optimal angle 'Y' (FIG. 9) and about a horizontal axis 'T' through arc 'Z' (FIG. 10) for viewing to the left rear of the vehicle at the left-most adjacent traffic lane typically known as another of the vehicle's blind spots.

Since many modifications, variations, and changes in detail can be made to the described preferred embodiments of the invention, it is intended that all matters in the foregoing description and shown in the accompanying drawings be interpreted as illustrative and not in a limiting sense. Thus, the scope of the invention should be determined by the appended claims and their legal equivalents.

## Claims

1. A rear-view mirror assembly for viewing to the rear of a vehicle at least adjacent lanes to the lane occupied by the vehicle, said rear view mirror assembly comprising:
a mount for mounting said rear view mirror assembly to an interior of the vehicle;
a mirror having a rear mirror shell, a flat reflective surface rigidly mounted to a front of said mirror shell;
an electric servo mounted to a rear of said shell, said electric servo attached to said mount and operable to selectively pivot said mirror about a vertical axis and a horizontal axis;
a switch remotely mounted from said mirror and accessible to an operator of the vehicle, said switch selectively positionable to selectively drive said servo for pivoting said mirror about said vertical axis and said horizontal axis.

2. The rear-view mirror assembly according to claim 1 wherein said switch is mounted on a steering wheel of the vehicle.

3. The rear-view mirror assembly according to claim 2 wherein said switch comprises a first switch and a second switch, said first switch mounted proximate to a left side of the steering wheel and said second switch mounted proximate to a right side of the steering wheel.

4. The rear-view mirror assembly according to claim 2 wherein said switch is a rocker switch, said rocker switch depressible in at least two different directions, a first direction controlling said servo to pivot said mirror about said vertical axis and a second direction to pivot said mirror about said horizontal axis.

5. The rear-view mirror assembly according to claim 1 wherein said switch includes a selective memory position, said memory position slaving said servo to return said mirror to a preset orientation.

6. The rear-view mirror assembly according to claim 1 further including a steering sensor electronically integrated therein such that when said steering sensor detects a return to a straight ahead steering position from a turning position, said servo is slaved to return said mirror to a preset orientation.

7. A rear view mirror assembly for viewing to the rear of a vehicle at least adjacent lanes to the lane occupied by the vehicle, said rear view mirror assembly comprising:
a mount for mounting said rear view mirror assembly to an interior of the vehicle;
a center mirror attached to said mount and adjustable about at least a vertical axis with respect to said mount for viewing to the rear at least the lane occupied by the vehicle;
a left mirror adjustably mounted to a left side of said center mirror and selectively adjustable with respect to said center mirror for viewing a first lane other than the lane occupied by the vehicle; and
a right mirror adjustably mounted to a right side of said center mirror and selectively adjustable with respect to said center mirror for viewing a second lane other than the lane occupied by the vehicle.

8. The rear-view mirror assembly according to claim 7 wherein each said center mirror, left mirror, and right mirror includes a rear mirror shell and a flat reflective surface rigidly mounted to a front of said shell.

9. The rear-view mirror assembly according to claim 7 wherein said left mirror and said right mirror are each pivotal about a respective left vertical axis and a right vertical axis, and a respective left horizontal axis and a right horizontal axis.

10. The rear-view mirror assembly according to claim 9 wherein said left mirror is mounted to a left end of said center mirror and wherein said right mirror is mounted to a right end of said center mirror.

11. The rear-view mirror assembly according to claim 10 wherein:
said left mirror and said center mirror left end are joined one to the other with a left friction joint; and
said right mirror and said center mirror right end are joined one to the other with a right friction joint.

12. The rear-view mirror assembly according to claim 11 wherein:
said left friction joint defines said left vertical axis about which said left mirror is pivotal; and
said right friction joint defines said right vertical axis about which said right mirror is pivotal.

13. The rear-view mirror assembly according to claim 12 wherein:
said left friction joint comprises a left cylindrical head cantilevered from said left end of said center mirror, said left cylindrical head defining said left vertical axis, a left friction sleeve frictionally engaged about said left cylindrical head and further including a left horizontal stub extending therefrom, said left horizontal stub frictionally received in a horizontal receptacle extending from a right end of said left mirror;
said right friction joint comprises a right cylindrical head cantilevered from said right end of said center mirror, said right cylindrical head defining said right vertical axis, a left friction sleeve frictionally engaged about said right cylindrical head and further including a right horizontal stub extending therefrom, said right horizontal stub frictionally received in a horizontal receptacle extending from a left end of said right mirror.

14. The rear-view mirror assembly according to claim 13 wherein said left horizontal stub and said horizontal receptacle extending from said right end of said left mirror define said left horizontal axis about which said left mirror is pivotal, and wherein said right horizontal stub and said horizontal receptacle extending from said left end of said right mirror defines said right horizontal axis about which said right mirror is pivotal.

15. The rear-view mirror assembly according to claim 9 wherein:
said left mirror is at least pivotal about said left vertical axis in a counter-clockwise direction between a position substantially linearly in line with said center mirror and a position substantially at a right angle with said center mirror; and
said right mirror is at least pivotal about said right vertical axis in a clockwise direction between a position substantially linearly in line with said center mirror and a position substantially at a right angle with said center mirror.
